# EUROPEAN PATENT SPECIFICATION

(11) **EP 4 242 077 B1**
(45) Date of publication and mention of the grant of the patent: **11.12.2024**
(21) Application number: 23161045.2
(22) Date of filing: 09.03.2023
(51) Int. Cl.: B60T 8/17, B60T 17/22

(54) **MONITORING OF LANDING GEAR SERVO VALVE ASSEMBLY**
ÜBERWACHUNG EINER FLUGZEUGFAHRWERKSERVOVENTILANORDNUNG
SURVEILLANCE D'UN ENSEMBLE DE SERVO-SOUPAPE DE TRAIN D'ATTERRISSAGE

(30) Priority: 09.03.2022 IN 202241012758; 01.06.2022 US 202217830025
(43) Date of publication of application: 13.09.2023
(73) Proprietor: Goodrich Corporation, Charlotte, NC 28217-4578 (US)
(72) Inventor: BELUSONTI, Venkata Kaushik, 532201 Andrhra Pradesh (IN); SAHA, Bipul, 700060 West Bengal (IN); KOLLIPARA, Hari Krishna Pavan Kumar, 522212 Andhra Pradesh (IN); SINGH, Sameep, Beavercreek, 45431 (US)
(74) Representative: Dehns

(56) References cited:
- EP-A1- 3 798 121
- CN-A- 108 169 091
- CN-U- 205 138 794
- US-A1- 2010 090 058
- US-A1- 2019 193 708
- US-A1- 2021 285 470
- US-A1- 2022 055 600

## Description

### CROSS-REFERENCE TO RELATED APPLICATIONS

This application claims priority to, and the benefit of, India Patent Application No. 202241012758, filed March 9, 2022 and titled "MONITORING OF LANDING GEAR SERVO VALVE ASSEMBLY."

### FIELD

The present invention relates to valves and, in particular, to systems and methods for monitoring a health of a landing gear servo valve.

### BACKGROUND

Aircraft typically include a braking system operatively coupled to the wheels of the aircraft and configured to slow the wheels, and the aircraft, during, for example, landing or a rejected takeoff. Brake systems typically employ a series of friction disks located about an axle. The friction disks may be compressed together to stop the aircraft. The compression of the friction disks may be controlled by one or more hydraulic actuator(s). Hydraulic fluid is typically provided to the hydraulic actuators via flexible hosing or tubing that is connected to a hydraulic fluid source located proximate the aircraft fuselage or wing. A servo valve controls the flow of the hydraulic fluid to and from the brake actuators. Wear of the servo valve can lead to performance degradation and/or improper function of the brake system. Monitoring servo valves is disclosed in EP 3 798 121 A1.

### SUMMARY

A system for monitoring an electrohydraulic servo valve is provided as defined by claim 1.

In a preferred embodiment, the operations may further comprise commanding, by the brake control unit, a display to output an alert in response to at least one of determining, by the brake control unit, the pressure in the conduit is greater than the upper pressure threshold; or determining, by the brake control unit, the pressure in the conduit is less than the lower pressure threshold.

In a preferred embodiment, the operations may further comprise determining, by the brake control unit, a first difference between the pressure in the conduit and the upper pressure threshold; determining by the brake control unit, a second difference between the pressure in the conduit and the lower pressure threshold; and comparing, by the brake control unit, each of the first difference and the second different to a difference threshold.

In a preferred embodiment, the operations may further comprise commanding, by the brake control unit, a display to output a warning alert, in response to at least one of the first difference or the second difference being less than the difference threshold.

In a preferred embodiment, determining, by the brake control unit, the upper pressure threshold based on the current of the pressure signal may comprise determining, by the brake control unit, an expected pressure of the conduit based on the current of the pressure signal; and adding, by the brake control unit, a first value to the expected pressure.

In a preferred embodiment, determining, by the brake control unit, the upper pressure threshold based on the current of the pressure signal may comprise locating, by the brake control unit, a point on an upper threshold line corresponding the current of the pressure signal. The upper threshold line may be a linear line having a constant slope.

A method for monitoring an electrohydraulic servo valve of an aircraft landing gear is also provided as defined by claim 7.

In a preferred embodiment, the method may further comprise commanding, by the brake control unit, a display to output an alert in response to at least one of determining, by the brake control unit, the pressure in the conduit is greater than the upper pressure threshold; or determining, by the brake control unit, the pressure in the conduit is less than the lower pressure threshold.

In a preferred embodiment, comparing, by the brake control unit, the pressure in the conduit to the upper pressure threshold and to the lower pressure threshold may comprise determining, by the brake control unit, a first difference between the pressure in the conduit and the upper pressure threshold; determining by the brake control unit, a second difference between the pressure in the conduit and the lower pressure threshold; and comparing, by the brake control unit, each of the first difference and the second different to a difference threshold.

In a preferred embodiment, the method may further comprise commanding, by the brake control unit, the display to output a warning alert, in response to at least one of the first difference or the second difference being less than the difference threshold.

In a preferred embodiment, determining, by the brake control unit, the upper pressure threshold based on the current of the pressure signal may comprise determining, by the brake control unit, an expected pressure of the conduit based on the current of the pressure signal; and adding, by the brake control unit, a first value to the expected pressure.

In a preferred embodiment, determining, by the brake control unit, the upper pressure threshold based on the current of the pressure signal may comprise locating, by the brake control unit, a point on an upper threshold line corresponding the current of the pressure signal. The upper threshold line may be a linear line having a constant slope.

In a preferred embodiment, determining, by the brake control unit, the lower pressure threshold based on the current of the pressure signal may comprise locating, by the brake control unit, a point on a lower threshold line corresponding the current of the pressure signal. The lower threshold line may be parallel to the upper threshold line.

A landing gear is also disclosed herein. In accordance with various embodiments, the landing gear comprises a brake assembly including a brake stack and an actuator configured to apply pressure to the brake stack, an electrohydraulic servo valve configured to control a flow of fluid to the brake assembly, a conduit fluidly connecting a control port of the electrohydraulic servo valve and an inlet of the actuator, a valve monitoring sensor configured to measure at least one of a pressure or a fluid flow rate in the conduit, and a brake control unit in communication with the electrohydraulic servo valve and the valve monitoring sensor. The brake control unit may be configured to output a pressure signal to the electrohydraulic servo valve and to receive a sensor signal from the valve monitoring sensor. The brake control unit is configured to determine a health of the electrohydraulic servo valve based on the sensor signal and the pressure signal.

According to the invention, the brake control unit determines the health of the electrohydraulic servo valve by determining an upper pressure threshold and a lower pressure threshold based on a current of the pressure signal, determining the pressure in the conduit based on the sensor signal, and comparing the pressure in the conduit to the upper pressure threshold and the lower pressure threshold.

In a preferred embodiment, the brake control unit may be configured to determine a first difference between the pressure in the conduit and the upper pressure threshold and a second difference between the pressure in the conduit and the lower pressure threshold.

In a preferred embodiment, the brake control unit may be configured to command a display to output a first alert in response to determining at least one of the pressure in the conduit is greater than the upper pressure threshold or the pressure in the conduit is less than the lower pressure threshold.

In a preferred embodiment, the brake control unit may be configured to command the display to output a second alert, different from the first alert, in response to determining at least one of the pressure in the conduit is less than or equal to the upper pressure threshold and the first difference is less than a difference threshold, or the pressure in the conduit is greater than or equal to the lower pressure threshold and the second difference is less than the difference threshold.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present invention is defined in the appended claims, while exemplary embodiments are contained in this description and figures, wherein like numerals denote like elements.
FIG. 1 illustrates an aircraft, in accordance with various embodiments;
FIG. 2 illustrates a brake system for an aircraft, in accordance with various embodiments;
FIG. 3A illustrates an electrohydraulic servo valve in a first position, in accordance with various embodiments;
FIG. 3B illustrates the electrohydraulic servo valve of FIG. 3A in a second position, in accordance with various embodiments;
FIG. 3C illustrates translations of the electrohydraulic servo valve of FIG. 3B in a second axial direction, in accordance with various embodiments;
FIG. 4A and 4B illustrate a graphical representation of current versus servo valve pressure for an electrohydraulic servo valve in a healthy condition and in a fault condition, respectively, in accordance with various embodiments;
FIG. 5 illustrates a schematic of a system for monitoring health of an electrohydraulic servo valve, in accordance with various embodiments; and
FIGs. 6A, 6B, and 6C illustrate a method for monitoring health of an electrohydraulic servo valve, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the invention, it should be understood that other embodiments may be realized and that logical changes and adaptations in design and construction may be made within the scope of the claims. Thus, the detailed description herein is presented for purposes of illustration only and not limitation. The steps recited in any of the method or process descriptions may be executed in any order and are not necessarily limited to the order presented, and are limited only by the claims.

Furthermore, any reference to singular includes plural embodiments, and any reference to more than one component or step may include a singular embodiment or step.

Cross-hatching may be used throughout the figures to denote different parts but not necessarily to denote the same or different materials. Throughout the present invention, like reference numbers denote like elements. Accordingly, elements with like element numbering may be shown in the figures but may not necessarily be repeated for the sake of brevity.

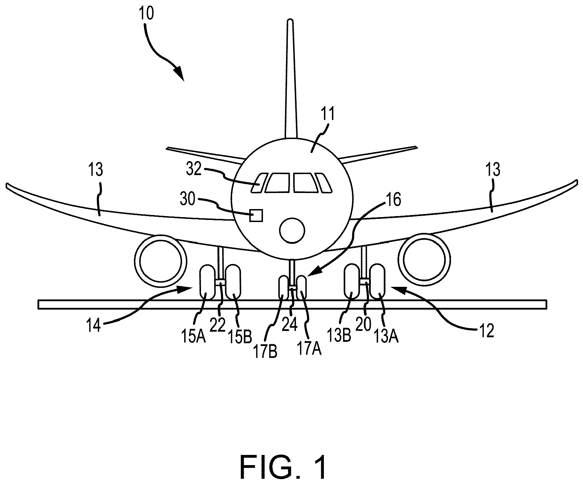

With reference to FIG. 1, an aircraft 10 including a fuselage 11 and wings 13 is illustrated, in accordance with various embodiments. Aircraft 10 includes landing gear such as left landing gear 12, right landing gear 14, and nose landing gear 16. Left landing gear 12, right landing gear 14, and nose landing gear 16 may generally support aircraft 10 when aircraft 10 is not flying, allowing aircraft 10 to taxi, take off, and land without damage. Left landing gear 12 may include left outboard (LOB) wheel 13A and left inboard (LIB) wheel 13B coupled by an axle 20. Right landing gear 14 may include right outboard (ROB) wheel 15A and right inboard (RIB) wheel 15B coupled by an axle 22. Nose landing gear 16 may include left nose wheel 17A and right nose wheel 17B coupled by an axle 24. The nose wheels may differ from the left and right landing gear wheels in that the nose wheels may not include a brake.

Aircraft 10 may comprise a brake control unit (BCU) 30 and cockpit controls 32. In various embodiments, the BCU 30 may be located in the fuselage of the aircraft. Left landing gear 12 and right landing gear 14 may be in communication with BCU 30 and may receive commands from BCU 30. For example, BCU 30 may send brake commands to left landing gear 12 and right landing gear 14 based on signals received from cockpit controls 32 (e.g., from a pilot or autobrake system), from sources external to the aircraft (e.g., from a ground controller), or from onboard sensors.

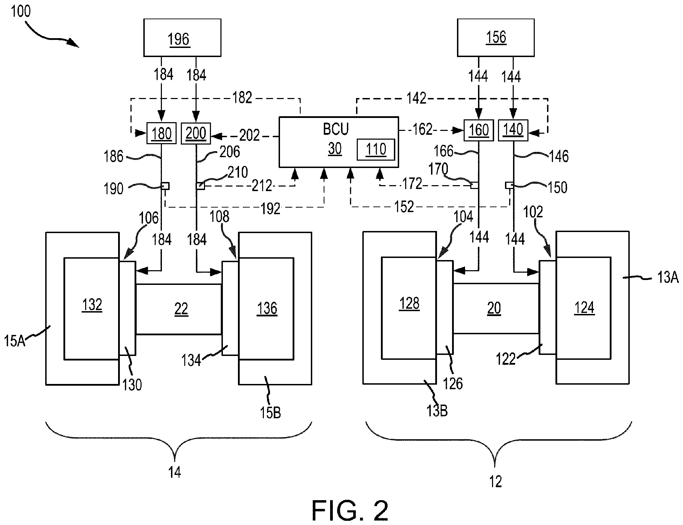

With reference to FIG. 2, a brake system 100 is shown, in accordance with various embodiments. In various embodiments, brake system 100 may be configured to control braking of left landing gear 12 and right landing gear 14. Brake system 100 may include a LOB brake assembly 102 coupled to LOB wheel 13A, a LIB brake assembly 104 coupled to LIB wheel 13B, a ROB brake assembly 106 coupled to ROB wheel 15A, and a RIB brake assembly 108 coupled to RIB wheel 15B. While FIG. 2 illustrates brake system 100 comprising two landing gears (i.e., left landing gear 12 and right landing gear 14) with four total wheels, it is further contemplated and understood that the systems and methods described herein may apply to brake systems comprising any number of landing gears and/or number of wheels per landing gear.

Brake assemblies 102, 104, 106, 108 are configured to apply and release braking force on their respective wheels. Brake assemblies 102, 104, 106, 108 may each comprise an actuator (e.g., a piston assembly) configured to apply pressure to a brake stack of the brake assembly. In this regard, LOB brake assembly 102 includes a LOB actuator 122 and a LOB brake stack 124, LIB brake assembly 104 includes a LIB actuator 126 and a LIB brake stack 128, ROB brake assembly 106 includes a ROB actuator 130 and a ROB brake stack 132, and RIB brake assembly 108 includes a RIB actuator 134 and a RIB brake stack 136. Each of the brake actuators 122, 126, 130, 134 is configured to apply pressure to its respective brake stack, thereby decreasing a rotational speed of the wheel coupled to the brake and/or preventing rotation of the wheel.

In accordance with various embodiments, BCU 30 controls the pressure applied by brake actuators 122, 126, 130, 134 via an electrohydraulic servo valve (EHSV) fluidly coupled to each of the brake actuators. In this regard, a LOB EHSV 140 is operably coupled to BCU 30 and LOB actuator 122, a LIB EHSV 160 is operably coupled to BCU 30 and LIB actuator 126, a ROB EHSV 180 is operably coupled to BCU 30 and ROB actuator 130, and a RIB EHSV 200 is operably coupled to BCU 30 and RIB actuator 134.

BCU 30 may include a general-purpose processor, a digital signal processor (DSP), an application specific integrated circuit (ASIC), a field programmable gate array (FPGA), or some other programmable logic device, discrete gate or transistor logic, discrete hardware components, or any combination thereof. A tangible, non-transitory computer-readable storage medium 110 may be in communication with BCU 30. The storage medium 110 may comprise any tangible, non-transitory computer-readable storage medium known in the art. The storage medium 110 has instructions stored thereon that, in response to execution by BCU 30, cause BCU 30 to perform operations related to monitoring a health of EHSVs 140, 160, 180, 200.

The term "non-transitory" is to be understood to remove only propagating transitory signals per se from the claim scope and does not relinquish rights to all standard computer-readable media that are not only propagating transitory signals per se.

In accordance with various embodiments, LOB EHSV 140 receives LOB pressure signals 142 from BCU 30 and provides fluid 144 to LOB actuator 122. LOB EHSV 140 may be fluidly connected to and may receive fluid 144 from a fluid source 156. LOB EHSV 140 modulates the flow rate and/or pressure of the fluid 144 provided to LOB actuator 122 based on the LOB pressure signal 142 received from BCU 30. In various embodiments, the pressure of the fluid 144 in the conduit (or fluid path) 146 connecting an outlet of LOB EHSV 140 and an inlet of LOB actuator 122 is proportional to the current of the LOB pressure signal 142 sent by BCU 30. Thus, the pressure applied by LOB actuator 122 to LOB brake stack 124 may be proportional to the current of LOB pressure signal 142. For example, BCU 30 may increase or decrease a pressure applied to LOB brake stack 124 by increasing or decreasing, respectively, the current of LOB pressure signal 142.

In accordance with various embodiments, a LOB valve monitoring sensor 150 may be coupled to conduit 146. LOB valve monitoring sensor 150 is configured to measure a pressure and/or flow rate of the fluid 144 in conduit 146. In this regard, LOB valve monitoring sensor 150 is located between the outlet of LOB EHSV 140 and the inlet of LOB actuator 122. LOB valve monitoring sensor 150 outputs a sensor signal 152 corresponding to the pressure and/or fluid flow rate in conduit 146 to BCU 30. Stated differently, BCU 30 receives sensor signal 152 from LOB valve monitoring sensor 150 and determines a pressure and/or a flow rate in conduit 146 based on the sensor signal 152. As described in further detail below, BCU 30 is configured to monitor a health of LOB EHSV 140 using sensor signal 152.

In accordance with various embodiments, LIB EHSV 160 receives LIB pressure signals 162 from BCU 30 and provides fluid 144 to LIB actuator 126. LOB EHSV 140 may be fluidly connected to and may receive fluid 144 from fluid source 156. While FIG. 2 shows LOB EHSV 140 and LIB EHSV 160 both receiving fluid from fluid source 156, in various embodiments, LOB EHSV 140 and LIB EHSV 160 may each have their own dedicated fluid source. In accordance with various embodiments, LIB EHSV 160 modulates the flow rate and/or pressure of the fluid 144 provided to LIB actuator 126 based on a LIB pressure signal 162 received from BCU 30. In various embodiments, the pressure of the fluid 144 in the conduit (or flow path) 166 connecting an outlet of LIB EHSV 160 and an inlet of LIB actuator 126 is proportional to the current of the LIB pressure signal 162 sent by BCU 30. Thus, the pressure applied by LIB actuator 126 to LIB brake stack 128 may be proportional to the current of LIB pressure signal 162. For example, BCU 30 may increase or decrease a pressure applied to LIB brake stack 128 by increasing or decreasing, respectively, the current of LIB pressure signal 162.

In accordance with various embodiments, a LIB valve monitoring sensor 170 may be coupled to conduit 166. LIB valve monitoring sensor 170 is configured to measure a pressure and/or flow rate of the fluid 144 in conduit 166. In this regard, LIB valve monitoring sensor 170 is located between the outlet of LIB EHSV 160 and the inlet of LIB actuator 126. LIB valve monitoring sensor 170 outputs a sensor signal 172 to BCU 30. Sensor signal 172 corresponds to (i.e., is indicative of) the pressure and/or fluid flow rate in conduit 166. Stated differently, BCU 30 receives sensor signal 172 from LIB valve monitoring sensor 170 and determines a pressure and/or a flow rate in conduit 166 based on the sensor signal 172. As described in further detail below, BCU 30 is configured to monitor a health of LIB EHSV 160 based on sensor signal 172.

In accordance with various embodiments, ROB EHSV 180 receives ROB pressure signals 182 from BCU 30 and provides a fluid 184 to ROB actuator 130. ROB EHSV 180 may be fluidly connected to and may receive fluid 184 from a fluid source 196. ROB EHSV 180 modulates the flow rate and/or pressure of the fluid 184 provided to ROB actuator 130 based on the ROB pressure signal 182 received from BCU 30. In various embodiments, the pressure and/or flow rate of the fluid 184 in a conduit 186 (or flow path) connecting ROB EHSV 180 and ROB actuator 130 is proportional to the current of the ROB pressure signal 182 sent by BCU 30. Thus, the pressure applied by ROB actuator 130 to ROB brake stack 132 may be proportional to the current of ROB pressure signal 182. For example, BCU 30 may increase or decrease a pressure applied to ROB brake stack 132 by increasing or decreasing, respectively, the current of ROB pressure signal 182.

In accordance with various embodiments, a ROB valve monitoring sensor 190 may be coupled to conduit 186. In this regard, ROB valve monitoring sensor 190 is located between the outlet of ROB EHSV 180 and the inlet of ROB actuator 130. ROB valve monitoring sensor 190 is configured to measure a pressure and/or flow rate of the fluid 184 in conduit 186. ROB valve monitoring sensor 190 outputs a sensor signal 192 to BCU 30 corresponding to the pressure and/or fluid flow rate in conduit 186. Stated differently, BCU 30 receives sensor signal 192 from ROB valve monitoring sensor 190 and determines a pressure and/or a flow rate in conduit 186 based on the sensor signal 192. As described in further detail below, BCU 30 is configured to monitor a health of ROB EHSV 180 using sensor signal 192.

In accordance with various embodiments, RIB EHSV 200 receives RIB pressure signals 202 from BCU 30 and provides fluid 184 to RIB actuator 134. RIB EHSV 200 may be fluidly connected to and may receive fluid 184 from fluid source 196. While FIG. 2 shows ROB EHSV 180 and RIB EHSV 200 both receiving fluid 184 from fluid source 196, in various embodiments, ROB EHSV 180 and RIB EHSV 200 may each have their own dedicated fluid source. In various embodiments, LOB EHSV 140, LIB EHSV 160, ROB EHSV 180, and RIB EHSV 200 may be fluidly connected to the same fluid source.

RIB EHSV 200 is configured to modulate the flow rate and/or pressure of the fluid 184 provided to RIB actuator 134 based on the RIB pressure signal 202 received from BCU 30. In various embodiments, the pressure and/or flow rate of the fluid 184 in the conduit (or flow path) 206 connecting RIB EHSV 200 and RIB actuator 134 is proportional to the current of the RIB pressure signal 202 sent by BCU 30. Thus, the pressure applied by RIB actuator 134 to RIB brake stack 136 may be proportional to the current of RIB pressure signal 202. For example, BCU 30 may increase or decrease a pressure applied to RIB brake stack 136 by increasing or decreasing, respectively, the current of RIB pressure signal 202.

In accordance with various embodiments, a RIB valve monitoring sensor 210 may be coupled to conduit 206. In this regard, RIB valve monitoring sensor 210 is located between the outlet of RIB EHSV 200 and the inlet of RIB actuator 134. RIB valve monitoring sensor 210 is configured to measure a pressure and/or flow rate of the fluid 184 in conduit 206. RIB valve monitoring sensor 210 outputs a sensor signal 212 to BCU 30 corresponding to the pressure and/or fluid flow rate in conduit 206. Stated differently, BCU 30 receives sensor signal 212 from RIB valve monitoring sensor 210 and determines a pressure and/or a flow rate in conduit 206 based on the sensor signal 212. As described in further detail below, BCU 30 is configured to monitor a health of RIB EHSV 200 using sensor signal 212.

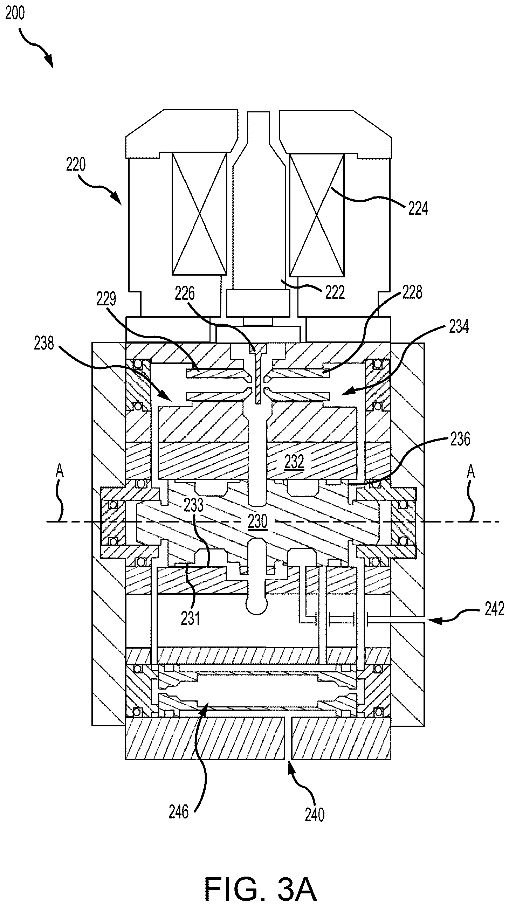

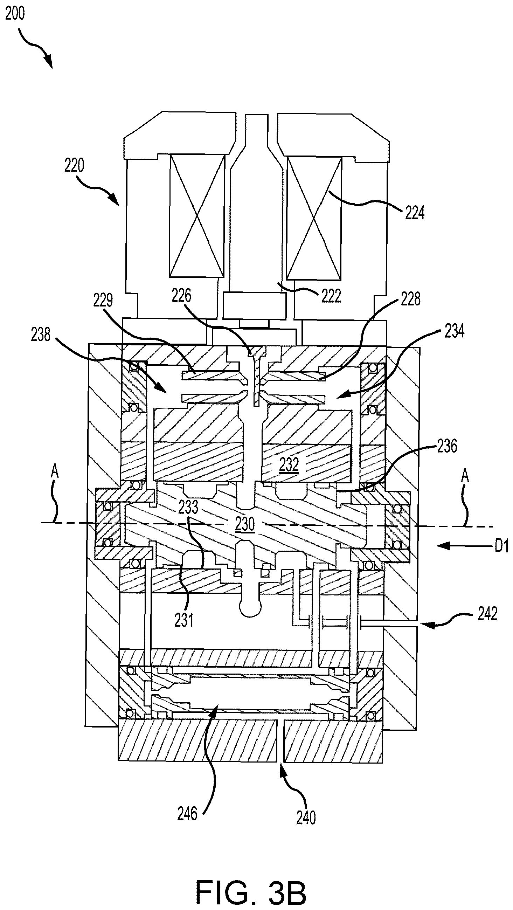

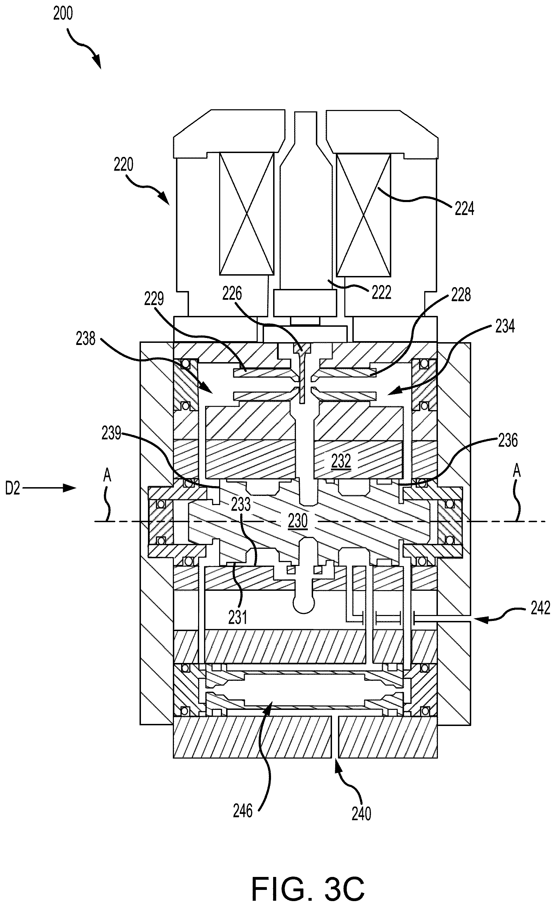

With reference to FIG. 3A, additional details of RIB EHSV 200 are illustrated. While FIGs. 3A, 3B, and 3C illustrate components of RIB EHSV 200, it should be understood that LOB EHSV 140, LIB EHSV 160, and ROB EHSV 180 include the elements and functionalities as described herein with respect to RIB EHSV 200. In accordance with various embodiments, RIB EHSV 200 includes a torque motor 220. Torque motor 220 includes an armature 222 and a coil 224.

RIB EHSV 200 further includes a spool 230 and a sleeve 232. Sleeve 232 is configured to surround an outer circumferential surface 231 of spool 230. A diameter of spool 230 may be varied along outer circumferential surface 231. Outer circumferential surface 231 and sleeve 232 may define various flow paths about spool 230. In this regard, sleeve 232 contacts portions of outer circumferential surface 231, thereby forming a sealing interface with the contacted portions of outer circumferential surface 231, and sleeve 232 is spaced apart from other portions of outer circumferential surface 231, thereby forming flow paths between the outer circumferential surface 231 of spool 230 and an inner circumferential surface 233 of sleeve 232. In various embodiments, one or more fluid path may also be formed through an interior of spool 230.

Spool 230 is configured to translate relative to and within sleeve 232. In this regard, spool 230 may translate axially along axis A. Sleeve 232 may be located about axis A. A flapper 226 is attached to armature 222. In response to receiving current in a first, or positive, direction (e.g., in response to a first pressure signal 202 (FIG. 2)), coil 224 generates a first magnetic field. The first magnetic field is configured to translate armature 222 in a first direction, thereby driving flapper 226 toward and/or into contact with a first nozzle 228 (as shown in FIG. 3B). In response to receiving current in a second, or negative, direction (e.g., in response to a second pressure signal 202 (FIG. 2)), coil 224 generates a second magnetic field in the opposite direction of the first magnetic field. The second magnetic field is configured to translate armature 222 in a second direction, thereby driving flapper 226 toward and/or into contact with a second nozzle 229 (as shown in FIG. 3C).

With reference to FIG. 3B, translation of flapper 226 into contact with first nozzle 228 increases the fluid pressure in within a first pressure stage 234 of RIB EHSV 200. First pressure stage 234 may be defined, at least partially, by a first end 236 of spool 230. The increase in fluid pressure in first pressure stage 234 increases a pressure exerted on first end 236 of spool 230 and thereby forces spool 230 to translate in a first axial direction D1. With reference to FIG. 3C, translation of flapper 226 into contact with second nozzle 129 increases the fluid pressure in within a second pressure stage 238 of RIB EHSV 200. Second pressure stage 238 may be defined, at least partially, by a second end 239 of spool 230. The increase in fluid pressure in second pressure stage 238 increases the pressure exerted on second end 239 of spool 230 and thereby forces spool 230 to translate in a second axial direction D2. Thus, the axial direction of translation of spool 230 may be controlled by applying current in either the first direction (e.g., positive current) or in the second direction (e.g., negative current) to coil 224.

RIB EHSV 200 includes a supply port 240. With combined reference to FIG. 2 and FIG. 3A, fluid 184 (FIG. 2) from fluid source 196 (FIG. 2) may be received at supply port 240. Stated differently, the fluid 184 from fluid source 196 flows into RIB EHSV 200 via supply port 240. In various embodiments, a filter assembly 246 may be fluidly coupled to supply port 240 such that fluid flows into filter assembly 246 upon entering RIB EHSV 200 via supply port 240. Filter assembly 246 may define multiple orifices and flow paths configured to fluidly connect supply port 240 to various components of RIB EHSV 200.

RIB EHSV 200 also includes a control port 242. Conduit 206 (FIG. 2) may be fluidly connected to control port 242 (e.g., control port 242 may form an outlet of RIB EHSV 200). Fluid 184 (FIG. 2) may flow between conduit 206 (FIG. 2) and RIB EHSV 200 via control port 242.

In FIG. 3A, spool 230 is illustrated in a first, or closed, position. In the first position, supply port 240 may be fluidly sealed from control port 242. Stated differently, in the first position, spool 230 may block fluid from supply port 240 from reaching control port 242. In FIG. 3B, spool 230 is illustrated in a second, or open, position. In the second position, supply port 240 is fluidly connected to control port 242. Stated differently, in the second position, spool 230 and sleeve 232 may define a fluid path that allows the fluid from supply port 240 to reach control port 242.

In various embodiments, the second position may represent a fully open, or 100% open, position and the first position may represent a closed, or 0% open, position. The position of spool 230 between the fully open position and the closed position (i.e., the 100% open position and 0% open position) may be controlled by the amount of current supplied to coil 224. For example, spool 230 may be located between the fully open and close position (e.g., at a 25% open position, a 50% open position, a 75% open position, etc.) and the current applied to coil 224 may control the position of spool 230. The pressure in conduit 206 (FIG. 2) may be proportional to the position of spool 230 and increasing the open percentage increases the pressure and/or flow rate of fluid 184 (FIG. 2) in conduit 206 (FIG. 2). Thus, the pressure and/or flow rate of fluid 184 (FIG. 2) is also proportional to the current applied to coil 224 (e.g., an increase in the current, increases the pressure and flow rate in conduit 206).

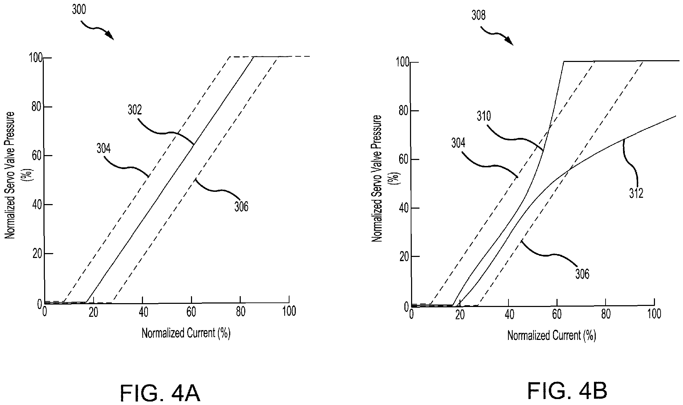

With reference FIG. 4A, a graphical representation 300 of normalized servo valve pressure versus normalized current is illustrated. With combined reference to FIGs. 4A, 2, and 3A, normalized current, which is located along the x-axis, is representative of the current supplied to coil 224. In this regard, the current values on the x-axis are determined based on the current of the pressure signal output by BCU 30 (e.g., the current of pressure signal 142, 162, 182 or 202). Normalized servo valve pressure, which is located along the y-axis, is representative of the pressure in conduit 206. In this regard, servo valve pressure values are determined from the sensor signals output by the valve monitoring sensor (e.g., by valve monitoring sensor 150, 170, 190 or 210). Line 302 in graph 300 illustrates the static gain of a healthy EHSV. As shown in graph 300, in a healthy EHSV, line 302 is generally linear and/or has a constant, linear slope when the normalized pressure is greater than 0% and less than 100% (e.g., between approximately 18% and 85% normalized current). Thus, in a healthy EHSV, the change pressure in conduit 206 is proportional to the current supplied to coil 224. In accordance with various embodiments, an expected pressure may be determined from line 302. In this regard, the points along line 302 represent the expected pressure values relative to the current provided to coil 224.

Line 304 in graph 300 represents an upper pressure threshold. Line 306 represents a lower pressure threshold. The upper pressure threshold 304 and the lower pressure threshold 306 may a have a slope that is equal to the static gain (e.g., line 302) of a healthy EHSV between normalized pressures greater than 0% and less than 100%. In this regard, the slope of upper pressure threshold line 304 between approximately 10% normalized current and approximately 77% normalized current may be linear and/or constant and/or parallel to line 302. Similarly, the slope of lower pressure threshold line 306 between approximately 26% normalized current and approximately 93% normalized current may be linear and/or constant and/or parallel to line 302.

The translation of spool 230 relative to sleeve 232 can cause spool 230 and/or sleeve 232 to wear. Wear of the spool 230 and/or of the sleeve 232 may create clearance(s) between the inner circumferential surface 233 of the sleeve 232 and the outer circumferential surface 231 of the spool 230. The clearance(s) may allow fluid to leak between the spool 230 and the sleeve 232 and this fluid leakage tends to result in the static gain characteristics of the servo valve no longer being linear. For example, not to be bound by theory, it is believed that leakage flow is proportional to the cube of diametrical clearance and inversely proportional to length of clearance. With increase in wear at spool-sleeve interface, diametric clearance increases as a cubical function resulting in loss of the linearity of static gain characteristics of the EHSV. Similarly, debris may also find its way into the EHSV and/or cause fluid flow blockage, which can result in the loss of the linearity of static gain characteristics of the EHSV.

For example, with reference to FIG. 4B, line 310 and line 312 in graph 308 illustrate the static gain of unhealthy EHSVs. For example, EHSV having a worn spool, a worn sleeve and/or blockage from debris. The slope of line 310, which is nonlinear, indicates an EHSV is experiencing a fault condition and/or is exhibiting wear. Further, at approximately 58% normalized current, line 310 crosses upper pressure threshold 304. The steeper than expected slope of line 310 indicates that the pressure in conduit 206 is greater than expected based on the current being provided to the EHSV coil. Similarly, the slope of line 312, which is nonlinear, also indicates an EHSV that experiencing a fault condition and/or is exhibiting wear. Further, at approximately 65% normalized current, line 312 crosses lower pressure threshold 306. The flatter than expected slope of line 312 indicates that the pressure in conduit 206 is less than expected based on the current being provided to the EHSV coil.

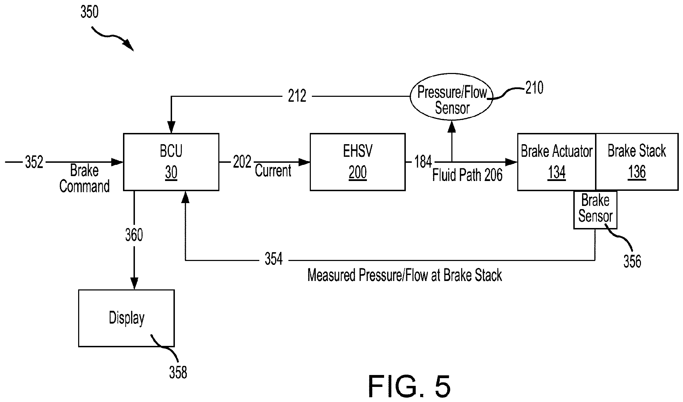

With reference to FIG. 5, a system 350 for monitoring the health of an EHSV is illustrated. In various embodiments, system 350 may be installed in aircraft 10 (FIG. 1). Elements of system 350 with like numbering to FIG. 2 are intending to be the same and may not necessarily be repeated for the sake of brevity. While system 350 is shown as monitoring the health of RIB EHSV, it is contemplated and understood that similar systems may be employed to monitor the health of the other EHSVs. System 350 includes BCU 30. BCU is configured to receive a brake command 352. Brake command 352 may be sent from cockpit controls 32 in FIG. 1 (e.g., from a pilot or autobrake system of aircraft 10), from sources external to the aircraft 10 (e.g., from a ground controller), or from onboard sensors.

BCU 30 is configured to determine a current for pressure signal 202 based on brake command 352. BCU 30 sends pressure signal 202 to EHSV 200 (e.g., to coil 224 FIG. 3A). Pressure signal 202 causes translation of spool 230 (FIG. 3A) and thereby changes (e.g., increases) the flow rate of fluid 184 through conduit 206 and/or the fluid pressure in conduit 206. As used here, the "flow rate" of a fluid refers to the volume of fluid flowing through an area relative to a duration of time (e.g. cubic feet or cubic meters per second). The change in flow rate and/or fluid pressure in conduit 206 changes the pressure applied by actuator 134 to brake stack 136.

BCU 30 may further receive a brake pressure signal 354 from a brake pressure sensor 356. Brake pressure sensor 356 is configured to measure a pressure applied to brake stack 136 by actuator 134. The brake pressure signal 354 corresponds to the measured pressure. In this regard, BCU 30 may determine the pressure applied to brake stack 156 based on brake pressure signal 354. BCU 30 may compare the pressure applied to an expected brake stack pressure 156. BCU 30 may determine the expected brake stack pressure based on the brake command. If the pressure applied to brake stack 156 is different from the expected brake stack pressure, BCU 30 may adjust the current of pressure signal 202. BCU 30 may continue to adjust the current of pressure signal 202, until the pressure applied to brake stack 156 is equal, or approximately equal, to the expected brake stack pressure.

System 350 includes valve monitoring sensor 210. Valve monitoring sensor 210 is coupled to conduit 206 and is configured to measure at least one of the flow rate or the pressure in conduit 206. Valve monitoring sensor 210 outputs sensor signal 212 corresponding the pressure and/or flow rate measured by valve monitoring sensor 210. BCU receives sensor signal 212 and determines a pressure in conduit 206 based on sensor signal 212. If sensor signal 212 corresponds to a flow rate, BCU 30 may determine the pressure that corresponds to the flow rate.

In accordance with various embodiments, BCU 30 also determines the health of EHSV 200 based on the pressure in conduit 206. In this regard, BCU 30 may compare the pressure in conduit 206 to an upper pressure threshold and a lower pressure threshold. BCU 30 may determine the upper pressure threshold and the lower pressure threshold based on the current of the pressure signal 202 sent to EHSV 200. In this regard, BCU 30 may access a look up table stored in storage medium 110 (or any other memory accessible to BCU 30). The upper pressure threshold values in the lookup table may correspond to points along an upper threshold line similar to line 304 in FIGs. 4A and 4B. The lower pressure threshold values in the lookup table may correspond to points along a lower threshold line similar to line 306 in FIGs. 4A and 4B.

In various embodiments, BCU 30 may determine the upper pressure threshold and the lower pressure threshold by determining an expected pressure based on the current of pressure signal 202 and adding or subtracting a set value to or from the expected pressure to calculate the upper and lower pressure thresholds, respectively. The expected pressure is proportional to the current such that a slope of the expected static gain is linear.

BCU 30 compares the pressure in conduit 206 to the upper and lower pressure threshold. System 350 includes a display 358. BCU 30 may send display commands 360 to display 358. Display 358 may be configured to convey a health status of EHSV 200 to aircraft crew, ground crew, and/or maintenance personnel. Display 358 may be configured to output various status alerts based on the display command 360 received from BCU 30. The status alert output by display 358 may be images, symbols, text messages, audio messages, illuminated lights, or any other alert capable of conveying information about the health of EHSV 200 to aircraft crew, ground crew, and/or maintenance personnel.

For example, BCU 30 may output a first display command 360 configured to cause display 358 to output an immediate maintenance needed (or first) alert in response to BCU 30 determining the pressure in conduit 206 is greater than the upper pressure threshold or less than the lower pressure threshold. The immediate maintenance needed alert is configured to convey to aircraft crew, ground crew, and/or maintenance personnel that maintenance and/or replacement of one or more components of EHSV 200 is needed immediately. BCU 30 may output a second display command 360 configured to cause display 358 to output a warning (or second) alert in response to BCU 30 determining the pressure in conduit 206 is less than the upper pressure threshold and that the difference between the pressure in conduit 206 and the upper pressure threshold is less than a threshold difference (e.g., in response to the determining the pressure in conduit 206 is approaching the upper pressure threshold). BCU 30 may similarly output the second display command 360 configured to cause display 358 to output the warning alert in response to BCU 30 determining the pressure in conduit 206 is greater than the lower pressure threshold and the difference between the pressure in conduit 206 and the lower pressure threshold is less than the threshold difference (e.g., in response to determining the pressure in conduit 206 is approaching the lower pressure threshold). The warning alert may be configured to convey to aircraft crew, ground crew, and/or maintenance personnel that maintenance of EHSV 200 should be scheduled. Alerting that maintenance should be scheduled tends to allow aircraft operators to better plan the aircraft's availability and/or reduces occurrences of unexpected and/or immediate maintenance operations.

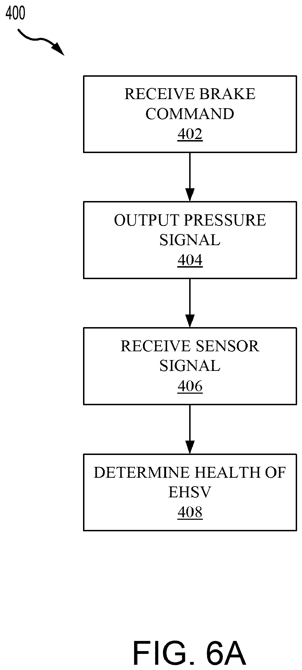

With reference to FIG. 6A, a method 400 for monitoring an electrohydraulic servo valve of an aircraft landing gear is shown. With combined reference to FIG. 6A and 5, in accordance with various embodiments, method 400 may be carried out by system 350. For example, one or more of the steps of method 400 may be performed by BCU 30. In various embodiments, method 400 may comprise receiving a brake command (step 402). Step 402 may include BCU 30 receiving brake command 352 from, for example, cockpit controls 32 (FIG. 1). Method 400 further includes BCU 30 outputting pressure signal 202 to the EHSV 200 based on the brake command 352 (step 404) and BCU 30 receiving sensor signal 212 from valve monitoring sensor 210 (step 406) with valve monitoring sensor 210 being configured to measure at least one of the pressure or the fluid flow in conduit 206, which is fluidly coupled to control port 242 of EHSV 200. Method 400 may further include BCU 30 determining the health of the EHSV 200 based on the sensor signal 212 (step 408).

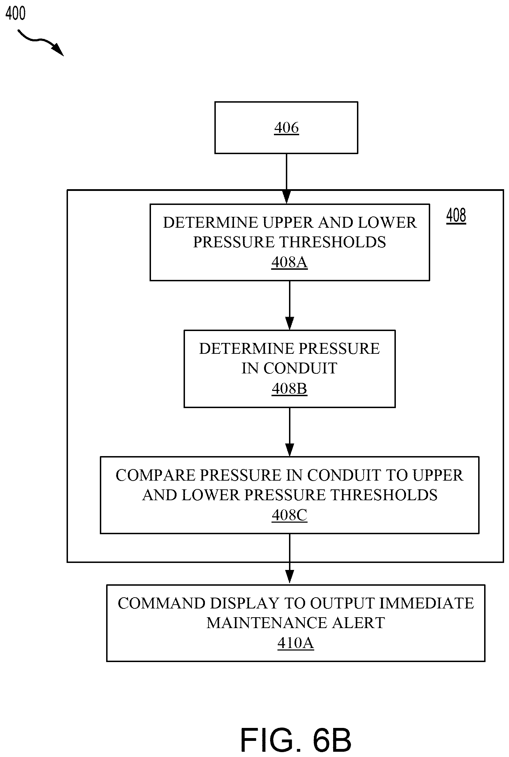

With reference to FIG. 6B, in various embodiments, step 408 may include BCU 30 determining an upper pressure threshold and a lower pressure threshold based on the current of pressure signal 202 (step 408A). In various embodiments, BCU 30 may determine the upper pressure threshold by determining an expected pressure of the conduit 206 based on the current of the pressure signal and then adding a first value to the expected pressure. BCU 30 may determine the lower pressure threshold by determining the expected pressure of the conduit 206 based on the current of the pressure signal 202 and then subtracting a second value from the expected pressure. The second value may be equal to or different from the first value.

In various embodiments, BCU 30 may determine the upper pressure threshold by locating a point on an upper threshold line (e.g., line 304 in FIG. 5A) corresponding the current of the pressure signal 202, where the upper pressure threshold line 304 is a linear line and has a constant slope. BCU 30 may determine the lower pressure threshold by locating a point on a lower threshold line (e.g., line 306 in FIG. A) corresponding the current of the pressure signal 202. The lower pressure threshold line 306 is parallel to the upper pressure threshold line 304.

In various embodiments, step 408 may further include BCU 30 determining the pressure in the conduit 206 based on the sensor signal 212 (step 408B) and BCU 30 comparing the pressure in the conduit 206 to the upper pressure threshold and to the lower pressure threshold (step 408C).

In various embodiments, method 400 may further comprise BCU 30 commanding display 358 to output an alert in response to BC determining that the pressure in the conduit 206 is greater than the upper pressure threshold or that the pressure in the conduit is less than the lower pressure threshold (step 410A).

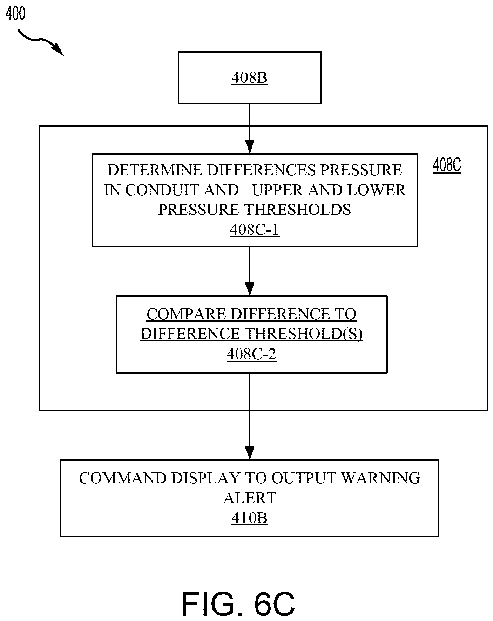

With reference to FIG. 6C, in various embodiments, step 408C may include BCU 30 determining a first difference between the pressure in the conduit 16 and the upper pressure threshold and a second difference between the pressure in the conduit 206 and the lower pressure threshold (step 408C-1). BCU 30 may then compare each of the first difference and second difference to a difference threshold (step 408C-2). In various embodiments, the first difference and the second difference may be compared to the same difference threshold. In various embodiments, a first difference threshold used for the first difference may be different from a second difference threshold used for the second difference.

In various embodiments, method 400 may further include BCU 30 commanding display 358 to output a warning alert, in response to at least one of the first difference or the second difference being less than the difference threshold (step 410B).

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

## Claims

1. A system for monitoring an electrohydraulic servo valve (140), comprising:
a brake control unit (30);
a valve monitoring sensor (150) configured to measure at least one of a pressure or a fluid flow rate in a conduit (206) fluidly connected to a control port of the electrohydraulic servo valve; and
a tangible, non-transitory memory (110) configured to communicate with the brake control unit, the tangible, non-transitory memory having instructions stored thereon that, in response to execution by the brake control unit, cause the brake control unit to perform operations comprising:
receiving, by the brake control unit (30), a brake command;
outputting, by the brake control unit, a pressure signal to the electrohydraulic servo valve (140) based on the brake command;
receiving, by the brake control unit, a sensor signal from the valve monitoring sensor (150); **characterised by**
determining, by the brake control unit, an upper pressure threshold based on a current of the pressure signal;
determining, by the brake control unit, a lower pressure threshold based on the current of the pressure signal;
determining, by the brake control unit, the pressure in the conduit based on the sensor signal; and
comparing, by the brake control unit, the pressure in the conduit to the upper pressure threshold and the lower pressure threshold; and
determining, by the brake control unit, a health of the electrohydraulic servo valve based on the comparison of the pressure in the conduit to the upper pressure threshold and the lower pressure threshold.

2. The system of claim 1, wherein the operations further comprise:
commanding, by the brake control unit, a display (358) to output a maintenance needed alert in response to at least one of:
determining, by the brake control unit, the pressure in the conduit is greater than the upper pressure threshold; or
determining, by the brake control unit, the pressure in the conduit is less than the lower pressure threshold.

3. The system of claim 1, wherein the operations further comprise:
determining, by the brake control unit, a first difference between the pressure in the conduit and the upper pressure threshold;
determining by the brake control unit, a second difference between the pressure in the conduit and the lower pressure threshold; and
comparing, by the brake control unit, each of the first difference and the second different to a difference threshold.

4. The system of claim 3, wherein the operations further comprise commanding, by the brake control unit, a display to output a warning alert, in response to at least one of the first difference or the second difference being less than the difference threshold.

5. The system of claim 4, wherein determining, by the brake control unit, the upper pressure threshold based on the current of the pressure signal comprises:
determining, by the brake control unit, an expected pressure of the conduit based on the current of the pressure signal; and
adding, by the brake control unit, a first value to the expected pressure.

6. The system of claim 5, wherein determining, by the brake control unit, the upper pressure threshold based on the current of the pressure signal comprises locating, by the brake control unit, a point on an upper threshold line corresponding the current of the pressure signal, wherein the upper threshold line is a linear line having a constant slope.

7. A method for monitoring an electrohydraulic servo valve (140) of an aircraft landing gear, the method comprising:
receiving, by a brake control unit (30), a brake command;
outputting, by the brake control unit, a pressure signal to the electrohydraulic servo valve based on the brake command;
receiving, by the brake control unit, a sensor signal from a valve monitoring sensor (150), wherein the valve monitoring sensor is configured to measure at least one of a pressure or a fluid flow rate in a conduit fluidly coupled to a control port of the electrohydraulic servo valve; **characterised by**
determining, by the brake control unit, an upper pressure threshold based on a current of the pressure signal;
determining, by the brake control unit, a lower pressure threshold based on the current of the pressure signal;
determining, by the brake control unit, the pressure in the conduit based on the sensor signal; and
comparing, by the brake control unit, the pressure in the conduit to the upper pressure threshold and the lower pressure threshold; and
determining, by the brake control unit, a health of the electrohydraulic servo valve based on the comparison of the pressure in the conduit to the upper pressure threshold and the lower pressure threshold.

8. The method of claim 7, further comprising:
commanding, by the brake control unit, a display to output an alert in response to at least one of:
determining, by the brake control unit, the pressure in the conduit is greater than the upper pressure threshold; or
determining, by the brake control unit, the pressure in the conduit is less than the lower pressure threshold.

9. The method of claim 8, wherein comparing, by the brake control unit, the pressure in the conduit to the upper pressure threshold and to the lower pressure threshold comprises:
determining, by the brake control unit, a first difference between the pressure in the conduit and the upper pressure threshold;
determining by the brake control unit, a second difference between the pressure in the conduit and the lower pressure threshold; and
comparing, by the brake control unit, each of the first difference and the second different to a difference threshold.

10. The method of claim 9, further comprising commanding, by the brake control unit, the display to output a warning alert, in response to at least one of the first difference or the second difference being less than the difference threshold.

11. The method of claim 10, wherein determining, by the brake control unit, the upper pressure threshold based on the current of the pressure signal comprises:
determining, by the brake control unit, an expected pressure of the conduit based on the current of the pressure signal; and
adding, by the brake control unit, a first value to the expected pressure.

12. The method of claim 10, wherein determining, by the brake control unit, the upper pressure threshold based on the current of the pressure signal comprises locating, by the brake control unit, a point on an upper threshold line corresponding the current of the pressure signal, wherein the upper threshold line is a linear line having a constant slope; and optionally wherein determining, by the brake control unit, the lower pressure threshold based on the current of the pressure signal comprises locating, by the brake control unit, a point on a lower threshold line corresponding the current of the pressure signal, wherein the lower threshold line parallel to the upper threshold line.

13. A landing gear, comprising:
a brake assembly (106) including a brake stack (128) and an actuator (122) configured to apply pressure to the brake stack;
an electrohydraulic servo valve (140) configured to control a flow of fluid to the brake assembly;
a conduit (206) fluidly connecting a control port of the electrohydraulic servo valve and an inlet of the actuator;
a system as claimed in any of claims 1 to 6 for monitoring the electrohydraulic servo valve.

## Patentansprüche

1. System zur Überwachung eines elektrohydraulischen Servoventils (140), umfassend:
eine Bremssteuereinheit (30);
einen Ventilüberwachungssensor (150), der dazu konfiguriert ist, mindestens eines von einem Druck oder einer Fluiddurchflussrate in einer Leitung (206) zu messen, die fluidisch mit einem Steueranschluss des elektrohydraulischen Servoventils verbunden ist; und
einen physischen, nichtflüchtigen Speicher (110), der dazu konfiguriert ist, mit der Bremssteuereinheit zu kommunizieren, wobei in dem physischen, nichtflüchtigen Speicher Instruktionen gespeichert sind, die als Reaktion auf eine Ausführung durch die Bremssteuereinheit die Bremssteuereinheit dazu veranlassen, Vorgänge durchzuführen, die Folgendes umfassen:
Empfangen, durch die Bremssteuereinheit (30), einer Bremsanweisung;
Ausgeben, durch die Bremssteuereinheit, eines Drucksignals an das elektrohydraulische Servoventil (140) basierend auf der Bremsanweisung;
Empfangen, durch die Bremssteuereinheit, eines Sensorsignals von dem Ventilüberwachungssensor (150); **gekennzeichnet durch** Bestimmen, durch die Bremssteuereinheit, eines oberen Druckschwellenwertes basierend auf einem Strom des Drucksignals; Bestimmen, durch die Bremssteuereinheit, eines unteren Druckschwellenwertes basierend auf dem Strom des Drucksignals; Bestimmen, durch die Bremssteuereinheit, des Drucks in der Leitung basierend auf dem Sensorsignal; und
Vergleichen, durch die Bremssteuereinheit, des Drucks in der Leitung mit dem oberen Druckschwellenwert und dem unteren Druckschwellenwert; und
Bestimmen, durch die Bremssteuereinheit, des Zustands des elektrohydraulischen Servoventils basierend auf dem Vergleich des Drucks in der Leitung mit dem oberen Druckschwellenwert und dem unteren Druckschwellenwert.

2. System nach Anspruch 1, wobei die Vorgänge ferner Folgendes umfassen:
Anweisen, durch die Bremssteuereinheit, einer Anzeige (358), einen Wartungsbedarfsalarm als Reaktion auf mindestens eines von Folgendem auszugeben:
Bestimmen durch die Bremssteuereinheit, dass der Druck in der Leitung größer als der obere Druckschwellenwert ist; oder
Bestimmen durch die Bremssteuereinheit, dass der Druck in der Leitung geringer als der untere Druckschwellenwert ist.

3. System nach Anspruch 1, wobei die Vorgänge ferner Folgendes umfassen:
Bestimmen, durch die Bremssteuereinheit, einer ersten Differenz zwischen dem Druck in der Leitung und dem oberen Druckschwellenwert;
Bestimmen, durch die Bremssteuereinheit, einer zweiten Differenz zwischen dem Druck in der Leitung und dem unteren Druckschwellenwert; und
Vergleichen, durch die Bremssteuereinheit, der ersten Differenz und der zweiten Differenz mit einem Differenzschwellenwert.

4. System nach Anspruch 3, wobei die Vorgänge ferner Anweisen, durch die Bremssteuereinheit, einer Anzeige, einen Warnalarm auszugeben, als Reaktion darauf, dass mindestens eine von der ersten Differenz oder der zweiten Differenz geringer als der Differenzschwellenwert ist, umfasst.

5. System nach Anspruch 4, wobei das Bestimmen, durch die Bremssteuereinheit, des oberen Druckschwellenwertes basierend auf dem Strom des Drucksignals Folgendes umfasst:
Bestimmen, durch die Bremssteuereinheit, eines erwarteten Drucks der Leitung basierend auf dem Strom des Drucksignals; und
Addieren, durch die Bremssteuereinheit, eines ersten Wertes zu dem erwarteten Druck.

6. System nach Anspruch 5, wobei das Bestimmen, durch die Bremssteuereinheit, des oberen Druckschwellenwertes basierend auf dem Strom des Drucksignals Lokalisieren, durch die Bremssteuereinheit, eines Punktes auf einer oberen Schwellenwertlinie, die dem Strom des Drucksignals entspricht, umfasst, wobei die obere Schwellenwertlinie eine lineare Linie ist, die eine konstante Steigung aufweist.

7. Verfahren zur Überwachung eines elektrohydraulischen Servoventils (140) eines Luftfahrzeugfahrwerks, wobei das Verfahren Folgendes umfasst:
Empfangen, durch eine Bremssteuereinheit (30), einer Bremsanweisung;
Ausgeben, durch die Bremssteuereinheit, eines Drucksignals an das elektrohydraulische Servoventil basierend auf der Bremsanweisung;
Empfangen, durch die Bremssteuereinheit, eines Sensorsignals von einem Ventilüberwachungssensor (150), wobei der Ventilüberwachungssensor dazu konfiguriert ist, mindestens eines von einem Druck oder einer Fluiddurchflussrate in einer Leitung zu messen, die fluidisch an einen Steueranschluss des elektrohydraulischen Servoventils gekoppelt ist; **gekennzeichnet durch**
Bestimmen, durch die Bremssteuereinheit, eines oberen Druckschwellenwertes basierend auf einem Strom des Drucksignals; Bestimmen, durch die Bremssteuereinheit, eines unteren Druckschwellenwertes basierend auf dem Strom des Drucksignals; Bestimmen, durch die Bremssteuereinheit, des Drucks in der Leitung basierend auf dem Sensorsignal; und
Vergleichen, durch die Bremssteuereinheit, des Drucks in der Leitung mit dem oberen Druckschwellenwert und dem unteren Druckschwellenwert; und
Bestimmen, durch die Bremssteuereinheit, des Zustands des elektrohydraulischen Servoventils basierend auf dem Vergleich des Drucks in der Leitung mit dem oberen Druckschwellenwert und dem unteren Druckschwellenwert.

8. Verfahren nach Anspruch 7, ferner umfassend:
Anweisen, durch die Bremssteuereinheit, einer Anzeige, einen Alarm als Reaktion auf mindestens eines von Folgendem auszugeben:
Bestimmen durch die Bremssteuereinheit, dass der Druck in der Leitung größer als der obere Druckschwellenwert ist; oder
Bestimmen durch die Bremssteuereinheit, dass der Druck in der Leitung geringer als der untere Druckschwellenwert ist.

9. Verfahren nach Anspruch 8, wobei das Vergleichen, durch die Bremssteuereinheit, des Drucks in der Leitung mit dem oberen Druckschwellenwert und dem unteren Druckschwellenwert Folgendes umfasst:
Bestimmen, durch die Bremssteuereinheit, einer ersten Differenz zwischen dem Druck in der Leitung und dem oberen Druckschwellenwert;
Bestimmen, durch die Bremssteuereinheit, einer zweiten Differenz zwischen dem Druck in der Leitung und dem unteren Druckschwellenwert; und
Vergleichen, durch die Bremssteuereinheit, der ersten Differenz und der zweiten Differenz mit einem Differenzschwellenwert.

10. Verfahren nach Anspruch 9, ferner umfassend Anweisen, durch die Bremssteuereinheit, der Anzeige, einen Warnalarm auszugeben, als Reaktion darauf, dass mindestens eine von der ersten Differenz oder der zweiten Differenz geringer als der Differenzschwellenwert ist.

11. Verfahren nach Anspruch 10, wobei das Bestimmen, durch die Bremssteuereinheit, des oberen Druckschwellenwertes basierend auf dem Strom des Drucksignals Folgendes umfasst:
Bestimmen, durch die Bremssteuereinheit, eines erwarteten Drucks der Leitung basierend auf dem Strom des Drucksignals; und
Addieren, durch die Bremssteuereinheit, eines ersten Wertes zu dem erwarteten Druck.

12. Verfahren nach Anspruch 10, wobei das Bestimmen, durch die Bremssteuereinheit, des oberen Druckschwellenwertes basierend auf dem Strom des Drucksignals Lokalisieren, durch die Bremssteuereinheit, eines Punktes auf einer oberen Schwellenwertlinie, die dem Strom des Drucksignals entspricht, umfasst, wobei die obere Schwellenwertlinie eine lineare Linie ist, die eine konstante Steigung aufweist; und wobei optional das Bestimmen, durch die Bremssteuereinheit, des unteren Druckschwellenwertes basierend auf dem Strom des Drucksignals Lokalisieren, durch die Bremssteuereinheit, eines Punktes auf einer unteren Schwellenwertlinie, die dem Strom des Drucksignals entspricht, umfasst, wobei die untere Schwellenwertlinie parallel zu der oberen Schwellenwertlinie verläuft.

13. Fahrwerk, umfassend:
eine Bremsanordnung (106), die einen Bremsstapel (128) und einen Aktor (122) umfasst, der dazu konfiguriert ist, Druck auf den Bremsstapel auszuüben;
ein elektrohydraulisches Servoventil (140), das dazu konfiguriert ist, einen Fluiddurchfluss zu der Bremsanordnung zu steuern;
eine Leitung (206), die einen Steueranschluss des elektrohydraulischen Servoventils und einen Einlass des Aktors fluidisch verbindet;
ein System nach einem der Ansprüche 1 bis 6 zur Überwachung des elektrohydraulischen Servoventils.

## Revendications

1. Système de surveillance d'une servovalve électrohydraulique (140), comprenant :
une unité de commande de frein (30) ;
un capteur de surveillance de soupape (150) configuré pour mesurer au moins l'une d'une pression ou d'un débit de fluide dans un conduit (206) relié fluidiquement à un port de commande de la servovalve électrohydraulique ; et
une mémoire tangible non transitoire (110) configurée pour communiquer avec l'unité de commande de frein, la mémoire tangible non transitoire ayant des instructions stockées sur celle-ci, qui, en réponse à l'exécution par l'unité de commande de frein, amènent l'unité de commande de frein à effectuer des opérations comprenant :
recevoir, par l'unité de commande de frein (30), une commande de freinage ;
livrer, par l'unité de commande de frein, un signal de pression à la servovalve électrohydraulique (140) sur la base de la commande de frein ;
recevoir, par l'unité de commande de frein, un signal de capteur provenant du capteur de surveillance de soupape (150) ; **caractérisé par**
déterminer, par l'unité de commande de frein, un seuil de pression supérieur sur la base d'un courant du signal de pression ;
déterminer, par l'unité de commande de frein, un seuil de pression supérieur sur la base d'un courant du signal de pression ;
déterminer, par l'unité de commande de frein, la pression dans le conduit en fonction du signal du capteur ; et
comparer, par l'unité de commande de freinage, la pression dans le conduit au seuil de pression supérieur et au seuil de pression inférieur ; et
déterminer, par l'unité de commande de frein, un état de santé de la servovalve électrohydraulique en fonction de la comparaison de la pression dans le conduit au seuil de pression supérieur et au seuil de pression inférieur.

2. Système selon la revendication 1, dans lequel les opérations comprennent également :
commander, par l'unité de commande de frein, à un affichage (358) d'émettre une alerte de maintenance nécessaire en réponse à au moins l'un des éléments suivants :
déterminer, par l'unité de commande de frein, que la pression dans le conduit est supérieure au seuil de pression supérieur ; ou
déterminer, par l'unité de commande de frein, que la pression dans le conduit est inférieure au seuil de pression inférieur.

3. Système selon la revendication 1, dans lequel les opérations comprennent également :
déterminer, par l'unité de commande de frein, une première différence entre la pression dans le conduit et le seuil de pression supérieur ;
déterminer, par l'unité de commande de frein, une seconde différence entre la pression dans le conduit et le seuil de pression inférieur ; et
en comparant, par l'unité de commande de freinage, chacune des première et deuxième différences à un seuil de différence.

4. Système selon la revendication 3, dans lequel les opérations comprennent également la commande, par l'unité de commande de frein, d'un affichage pour émettre une alerte d'avertissement, en réponse au fait qu'au moins l'une de la première différence ou de la seconde différence est inférieure au seuil de différence.

5. Système selon la revendication 4, dans lequel la détermination, par l'unité de commande de frein, du seuil de pression supérieur sur la base du courant du signal de pression comprend :
déterminer, par l'unité de commande de frein, une pression attendue du conduit en fonction du courant du signal de pression ; et
ajouter, par l'unité de commande de frein, une première valeur à la pression attendue.

6. Système selon la revendication 5, dans lequel la détermination, par l'unité de commande de frein, du seuil de pression supérieur sur la base du courant du signal de pression comprend la localisation, par l'unité de commande de frein, d'un point sur une ligne de seuil supérieure correspondant au courant du signal de pression, dans lequel la ligne de seuil supérieure est une ligne linéaire ayant une pente constante.

7. Procédé de surveillance d'une servovalve électrohydraulique (140) d'un train d'atterrissage d'aéronef, le procédé comprenant :
recevoir, par une unité de commande de frein (30), une commande de freinage ;
livrer, par l'unité de commande de frein, un signal de pression à la servovalve électrohydraulique sur la base de la commande de frein ;
recevoir, par l'unité de commande de frein, un signal de capteur provenant d'un capteur de surveillance de soupape (150), le capteur de surveillance de soupape étant configuré pour mesurer au moins l'une d'une pression ou d'un débit de fluide dans un conduit couplé fluidiquement à un port de commande de la servovalve électrohydraulique ; **caractérisé par** déterminer, par l'unité de commande de frein, un seuil de pression supérieur sur la base d'un courant du signal de pression ;
déterminer, par l'unité de commande de frein, un seuil de pression supérieur sur la base d'un courant du signal de pression ;
déterminer, par l'unité de commande de frein, la pression dans le conduit en fonction du signal du capteur ; et
comparer, par l'unité de commande de frein, la pression dans le conduit au seuil de pression supérieur et au seuil de pression inférieur ; et
déterminer, par l'unité de commande de frein, un état de santé de la servovalve électrohydraulique en fonction de la comparaison de la pression dans le conduit au seuil de pression supérieur et au seuil de pression inférieur.

8. Procédé selon la revendication 7, comprenant également :
commander, par l'unité de commande de frein, à un affichage d'émettre une alerte en réponse à au moins l'un des éléments suivants :
déterminer, par l'unité de commande de frein, que la pression dans le conduit est supérieure au seuil de pression supérieur ; ou
déterminer, par l'unité de commande de frein, que la pression dans le conduit est inférieure au seuil de pression inférieur.

9. Procédé selon la revendication 8, dans lequel la comparaison, par l'unité de commande de frein, de la pression dans le conduit au seuil de pression supérieur et au seuil de pression inférieur comprend :
déterminer, par l'unité de commande de frein, une première différence entre la pression dans le conduit et le seuil de pression supérieur ;
déterminer, par l'unité de commande de frein, une seconde différence entre la pression dans le conduit et le seuil de pression inférieur ; et
en comparant, par l'unité de commande de frein, chacune des première et deuxième différences à un seuil de différence.

10. Procédé selon la revendication 9, qui comprend également la commande, par l'unité de commande de frein, de l'affichage pour émettre une alerte d'avertissement, en réponse au fait qu'au moins l'une de la première différence ou de la seconde différence est inférieure au seuil de différence.

11. Procédé selon la revendication 10, dans lequel la détermination, par l'unité de commande de frein, du seuil de pression supérieur sur la base du courant du signal de pression comprend :
déterminer, par l'unité de commande de frein, une pression attendue du conduit en fonction du courant du signal de pression ; et
ajouter, par l'unité de commande de frein, une première valeur à la pression attendue.

12. Procédé selon la revendication 10, dans lequel la détermination, par l'unité de commande de frein, du seuil de pression supérieur sur la base du courant du signal de pression comprend la localisation, par l'unité de commande de frein, d'un point sur une ligne de seuil supérieure correspondant au courant du signal de pression, dans lequel la ligne de seuil supérieure est une ligne linéaire ayant une pente constante ;
et éventuellement dans lequel la détermination, par l'unité de commande de frein, du seuil de pression inférieur sur la base du courant du signal de pression comprend la localisation, par l'unité de commande de frein, d'un point sur une ligne de seuil inférieure correspondant au courant du signal de pression, la ligne de seuil inférieure étant parallèle à la ligne de seuil supérieure.

13. Train d'atterrissage, comprenant :
un ensemble de freinage (106) comportant une pile de freins (128) et un actionneur (122) configuré pour appliquer une pression sur la pile de freins ;
une servovalve électrohydraulique (140) configurée pour contrôler un débit de fluide vers l'ensemble de freinage ;
un conduit (206) reliant fluidiquement un orifice de commande de la servovalve électrohydraulique et une entrée de l'actionneur ;
un système tel que revendiqué dans l'une quelconque des revendications 1 à 6 pour surveiller la servovalve électrohydraulique.
